# FASCICULE DE BREVET EUROPEEN

(11) **EP 2 013 128 B1**
(45) Date de publication et mention de la délivrance du brevet: **03.07.2019**
(21) Numéro de dépôt: 07731939.0
(22) Date de dépôt: 24.04.2007
(51) Int. Cl.: D04H 3/07, D04H 1/74, B01D 39/16, D04H 1/64, D04H 3/011, D04H 3/12, D04H 13/00, D04H 3/14

(54) **PROCEDE DE FABRICATION DE NON-TISSE EN TROIS DIMENSIONS, LIGNE DE FABRICATION POUR LA MISE EN OEUVRE DE CE PROCEDE ET PRODUIT NON-TISSE EN TROIS DIMENSIONS OBTENU**
VERFAHREN ZUM HERSTELLEN EINES DREIDIMENSIONALEN FASERVLIESES, VORRICHTUNG UND FASERVLIES
PROCESS FOR THE MANUFACTURE OF A THREE-DIMENSIONAL NONWOVEN, MANUFACTURING LINE FOR IMPLEMENTING THIS PROCESS AND RESULTING THREE-DIMENSIONAL NONWOVEN PRODUCT

(30) Priorité: 26.04.2006 FR 0651483
(43) Date de publication de la demande: 14.01.2009
(73) Titulaire: N. Schlumberger (Société Par Actions Simplifiée), 68500 Guebwiller (FR)
(72) Inventeur: DUMAS, Jean-Louis, 68500 Guebwiller (FR); SCHAFFHAUSER, Jean Baptiste, 68610 Lautenbach (FR)
(74) Mandataire: Nuss, Laurent
(86) Numéro de dépôt international: PCT/FR2007/051166
(87) Numéro de publication internationale: WO 2007/125248

(56) Documents cités:
- EP-A2- 0 338 826
- WO-A-2004/098867
- WO-A1-2004/063445
- WO-A1-2005/081226
- CH-A5- 593 357
- DE-A1- 3 825 883
- DE-A1- 3 825 883
- GB-A- 627 367
- JP-A- 2 182 213
- JP-A- 2 189 111
- JP-A- 9 220 427
- JP-A- 62 140 820
- US-A- 4 398 319
- US-B1- 6 534 145
- US-B1- 6 871 480
- DATABASE WPI Week 199744 Thomson Scientific, London, GB; AN 1997-474601 & JP 9 220427 A (NITTA KK) 26 August 1997 (1997-08-26)

## Description

La présente invention concerne le domaine de l'industrie textile, en particulier de la fabrication de non-tissés, et a pour objet un nouveau procédé de fabrication de non-tissé en trois dimensions.

L'invention a également pour objet une ligne de fabrication pour la mise en oeuvre de ce procédé, ainsi que le produit obtenu par cette mise en oeuvre.

Les non-tissés en trois dimensions se distinguent des non tissés plats par leur forte épaisseur.

Des procédés de fabrication de tels non-tissés en trois dimensions, dont certains relèvent de technologies de voie directe du type connu sous les dénominations spunbond ou meltblown, sont notamment connus par les documents WO-A-05064060, W-A-O02549581, US-A-6582424, WO-A-04046443, WO-A-04072347, DE-A-10311439 et FR-A-2862986.

L'intérêt d'orienter verticalement les fibres dans une nappe de non-tissés réside dans le fait qu'une telle orientation permet notamment, de manière connue, l'obtention d'une faible densité et d'une haute résilience, d'une résistance à l'écrasement maintenue dans le temps et une facilité de recyclage.

Ces non-tissés en trois dimensions trouvent leur application dans l'isolation thermique et/ou acoustique, le remplacement de mousses Polyuréthane, les revêtements intérieurs de véhicules automobiles, les sièges pour automobiles, le revêtement intérieur de chaussures, les filtres, les soubassements de tapis, les matériaux d'emballage, le rembourrage de couettes ou d'oreillers, les moquettes velours ou bouclées et les renforts pour composites.

Actuellement, on connaît essentiellement trois catégories de procédés de plissage, à savoir :
- par mise en oeuvre de machines permettant de faire des plis longitudinaux ou transversaux, au moyen de deux cartons entre lesquels est placée une étoffe (FR-A-1595185) ou au moyen de moules plats ou cylindriques (FR-A-1463640),
- par mise en oeuvre de machines permettant de faire des plis longitudinaux, soit au moyen de ressorts et d'une bande (FR-A-2715947), soit au moyen de barres d'embarrage (FR-A-2398825), soit au moyen de disques intersectants (WO-A-9215315),
- par mise en oeuvre de machines permettant de faire des plis transversaux, par bambannage (FR-A-1514716), par roulette de pliage et de retenue (FR-A-1511985), par soufflage, par lames à déplacement rectiligne (EP-A-350627) ou par lames à déplacement circulaire (EP-A-516964).

Actuellement, l'orientation verticale des fibres s'effectuent, suivant différents procédés, à savoir : par un procédé d'aiguilletage velours selon un procédé connu sous la dénomination A50V de la société ASSELIN, au moyen de machines à tufter connues sous les dénominations COBBLE et MODRA, par un procédé connu sous la dénomination Web Linker de la société LAROCHE, par un procédé dit STRUTO à lames et ROTIS circulaire de la société STRUTO, par un procédé dénommé WAVEMAKER de la société SANTEX, par les procédés Kunit, Multiknit, Malivlies et Maliwatt de la société KARL MAYER MALIMO, par le procédé dit les indémaillables RASCHEL de la société KARL MAYER, par le procédé dénommé les indémaillables DG de la société LIBA ou par le procédé BEMAFORMER de la société BEMATIC.

Le document JP09220427 a pour objet un procédé de plissage en zig-zag d'une nappe non-tissé comportant un liant thermoplatique chauffé puis gauffré, dont les plis sont marqués par des lames s'étendant radialement sur des cylindres et la nappe est ensuite refroidie, puis coupée en bandes avant son passage dans la station de plissage définitif.

Le document DE 38 25 883 a pour objet un dispositif pour former des nappes de fibres. Il comprend, de l'amont vers l'aval, des cylindres d'alimentation et deux tambours montées de part et d'autre de la nappe et des moyens de gaufrage de la matière fibreuse constitués de lames attachées sur la surface cylindrique des tambours, des bandes mobiles en sortie desdits tambours et, plus en aval, des bandes transporteuses. Tous ces éléments mobiles du dispositif se déplaçent à la même vitesse linéaire. Il comprend également une chambre thermique comprenant des convoyeurs et étant située en arrière du dispositif.

Le document GB 627 367 a pour objet un dispositif de plissage pour plier des feuilles métalliques ou de textile, comprenant deux éléments rotatifs sur la surface desquels sont montées des lames mobiles, des plaques de guidage entre lesquelles passent les lames permettant le guidage du matériau plissé en dehors du dispositif de plissage et une boîte de compression comprenant un ressort agissant sur une barre située, entre les deux éléments rotatifs, sensiblement au niveau de la sortie du dispositif de plissage.

Ces techniques de fabrication connues ne permettent, cependant, pas la réalisation de non-tissé en trois dimensions, dont la structure présente une parfaite orientation verticale, qui est toutefois souhaitée, afin de conférer au non-tissé en trois dimensions la meilleure résilience tout en ayant une densité minimale.

La présente invention a pour but de pallier ces inconvénients en proposant un nouveau procédé de fabrication de non-tissé en trois dimensions, ainsi qu'une ligne de fabrication pour la mise en oeuvre de ce procédé.

A cet effet, le procédé de fabrication de non-tissé en trois dimensions est caractérisé en ce qu'il consiste à réaliser au moyen d'un élément plisseur coopérant avec un dispositif d'extraction qui se compose d'un couple de deux manchons, dont la vitesse linéaire de déplacement est légèrement supérieure à la vitesse de sortie de l'élément plisseur, à partir d'une nappe entrante comprenant une part de fibres thermoplastiques ou de matériau de fixation, une fixation préalable du pli de la nappe entrante, en forme de pics et de creux, obtenu par des lames s'étendant radialement sur des têtes de l'élément plisseur, cette fixation préalable étant effectuée, soit par un maintien en température de l'élément plisseur lui-même, soit par un chauffage de la nappe entrante.

L'invention a également pour objet une ligne de fabrication pour la mise en oeuvre de ce procédé, ladite ligne de fabrication comprenant un élément plisseur comportant au moins deux têtes, tambours ou axes équipés de lames radiales fixes ou orientables, qui s'entrecroisent et un dispositif d'extraction et se caractérise en ce que le dispositif d'extraction se compose d'un couple de deux manchons tendus entre deux cylindres, superposés mais espacés les uns des autres d'une distance qui est en relation directe avec la valeur d'interpénétration entre les lames et dont la vitesse linéaire de déplacement est légèrement supérieure à la vitesse de sortie de l'élément plisseur, les cylindres avals des manchons étant remplacés par des becs fixes ou par des becs à rouleaux et en ce que le dispositif d'extraction est prolongé soit par un dispositif de compression, qui est constitué par un ensemble de deux manchons tendus entre deux cylindres superposés, dont la vitesse linéaire de déplacement est inférieure à celle du dispositif d'extraction, afin d'assurer une compression du matériau, soit par un dispositif de compression, qui est constitué par un ensemble de plaques supérieure et inférieure chargées de comprimer le matériau plissé et de le conduire jusqu'à un poste de traitement en aval. L'invention a également pour objet le produit obtenu par la mise en oeuvre de ce procédé.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1 et 2 sont des vues en élévation latérale et en coupe d'une ligne de fabrication mettant en oeuvre le procédé conforme à l'invention au moyen d'une machine conforme à l'invention ;
les figures 3 à 7 sont des vues analogues à celles des figures 1 et 2 de variantes de réalisation de la machine conforme à l'invention ;
la figure 8 est une vue en élévation latérale à plus grande échelle des dispositifs d'extraction et de compression ;
les figures 9 à 11 sont des vues partielles en coupe, à plus grande échelle, représentant des détails des lames orientables de l'élément plisseur ;
la figure 12 est une vue en élévation latérale à plus grande échelle représentant un élément plisseur à lames orientables du type Gills à chaînes ;
la figure 13 est une vue analogue à celle de la figure 12 d'un élément plisseur à lames orientables du type Gills Soleil ;
la figure 14 est une représentation photographique d'un non-tissé en trois dimensions, et
les figures 15 et 16 sont des vues analogues à celles des figures 1 et 2 de lignes de fabrication mettant en oeuvre d'autres variantes de réalisation de la machine conforme à l'invention.

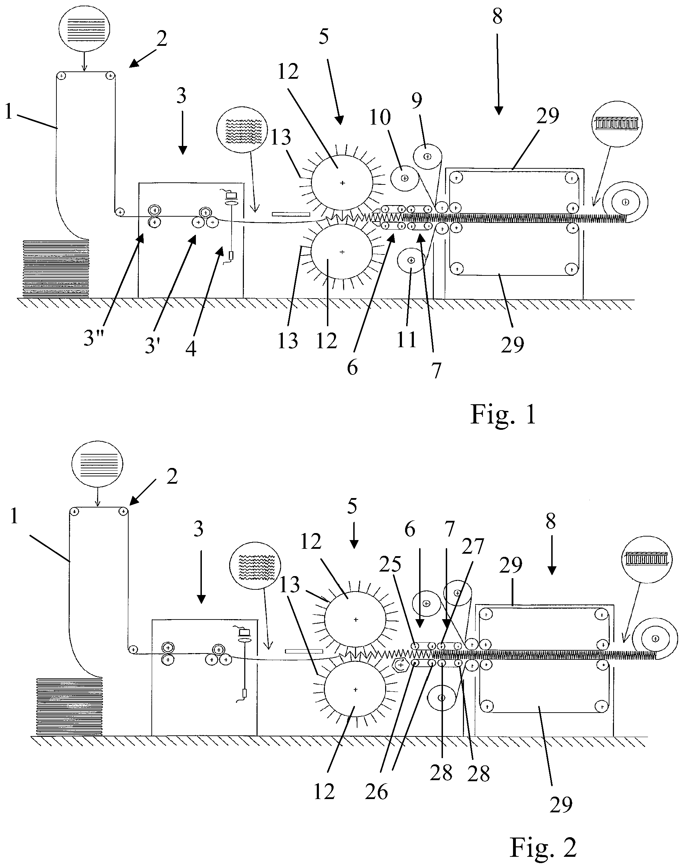

Les figures 1 et 2 des dessins annexés représentent une ligne de fabrication de non-tissé en trois dimensions, dans laquelle une ou plusieurs balles de câble 1 bicomposant de type T 254 de la société TREVIRA, comprenant une part de fibres thermoplastiques ou de matériau de fixation, sont placées dans un râtelier 2. Ce râtelier 2 est destiné à étaler les câbles issus de ces balles sur la largeur totale utile de la ligne de fabrication avant leur entrée dans une zone de défibrage 3, dans laquelle les filaments sont individualisés, c'est-à-dire sont décollés les uns des autres, de manière à obtenir une nappe très volumineuse à haut pouvoir couvrant, dénommée ci-après nappe entrante.

Cette zone de défibrage 3 est constituée par un groupe de cylindres étireurs 3' placés en aval et dont la vitesse est supérieure à celle d'un couple de cylindres de retenue 3" placés en amont. L'un des deux cylindres de retenue 3" est pourvue d'une rainure hélicoïdale, de sorte que seule une partie des filaments de la nappe entrante est pincée et donc étirée, alors que l'autre partie est détendue. Un léger déplacement des filaments les uns par rapport aux autres est ainsi créé, ce qui a pour effet de les individualiser. Des dispositifs de défibrage de ce type sont utilisés sur les machines de convertissage de câble dénommés Converter TT12 de la société N. SCHLUMBERGER. Afin de contrôler l'alimentation régulière de la ligne de fabrication, il est prévu un dispositif optique 4 de contrôle de la régularité de l'étalement de la nappe.

Conformément à l'invention, le procédé de fabrication de non-tissé en trois dimensions consiste à réaliser au moyen d'un élément plisseur 5 coopérant avec un dispositif d'extraction 6 qui se compose d'un couple de deux manchons 25, dont la vitesse linéaire de déplacement est légèrement supérieure à la vitesse de sortie de l'élément plisseur 5, à partir de la nappe entrante comprenant une part de fibres thermoplastiques ou de matériau de fixation, obtenue en sortie de la zone de défibrage 3, une fixation préalable du pli de la nappe entrante, en forme de pics et de creux, obtenu par des lames s'étendant radialement sur des têtes de l'élément plisseur 5, cette fixation préalable étant effectuée, soit par un maintien en température de l'élément plisseur 5 lui-même, soit par un chauffage de la nappe entrante.

L'élément plisseur 5 formant le moyen de mise en oeuvre de ce procédé, représenté aux figures 1 à 9, 12, 13, 15 et 16, comporte au moins deux têtes 12, tambours ou axes équipés de lames radiales, fixes 13 ou orientables 13', qui s'entrecroisent, et un dispositif d'extraction 6 qui se compose d'un couple de deux manchons 25, dont la vitesse linéaire de déplacement est légèrement supérieure à la vitesse de sortie de l'élément plisseur 5. Cet élément plisseur 5 est chargé de marquer des plis sur la nappe entrante et de créer des pics et des creux.

Pour la mise en oeuvre de l'invention, il est, bien entendu, nécessaire que la nappe entrante comprenne une part de fibres thermoplastiques ou un matériau de fixation thermoplastique, de préférence à bas point de ramollissement, de façon à permettre la fixation des plis.

A cet effet, selon une caractéristique de l'invention, la nappe entrante est constituée totalement, ou partiellement par des fibres synthétiques, par exemple mélangée avec d'autres fibres naturelles, minérales ou artificielles. Cette nappe entrante peut être sous la forme d'un voile de carde, d'un voile étalé nappé issu d'un étaleur nappeur, voire étiré successivement. Elle peut également être constituée par une bande de papier ou de carton de faible raideur, ou encore être composée de fils BCF (Bulky Continuous Filament) ou de filés de fibres. De préférence, la nappe est constituée sous forme d'une nappe de filaments continus juxtaposés parallèlement les uns par rapport aux autres. Cette nappe peut aussi provenir d'une installation d'extrusion filage du type spun bond ou melt blown ou encore d'une balle de câble.

Bien que la majorité des fibres synthétiques soient thermoplastiques, la température de ramollissement de celles-ci est souvent très élevée, de sorte qu'une dépense d'énergie de chauffage importante est nécessaire, ce qui renchérit d'autant le procédé de fabrication. Il est donc souhaitable d'utiliser des matériaux de fixation type « low melt », à bas point de ramollissement, afin de rendre le procédé plus économique.

Conformément à une autre caractéristique de l'invention, la nappe entrante pourra avantageusement être constituée par un mélange de fibres ou filaments polyester, de préférence du type polyéthylènetérephtalate (PET), destinées à former la structure du non-tissé en trois dimensions et d'un copolyester, de préférence du type copolyéthylènetérephtalate (COPET) formant matériau de fixation. Une utilisation de tels composants comportant le même type de monomère permet un recyclage aisé, sans nécessiter de séparation entre le matériau de fixation et le matériau constituant la structure. A titre d'exemple, un câble de filaments continus bicomposant dénommé commercialement « T 254 » de la société TREVIRA, à âme polyester (PET) et couverture copolyester (COPET) a été utilisé avec succès en tant que nappe entrante pour la mise en oeuvre du procédé suivant la présente invention. D'autres matériaux, tels que, notamment, les oléfines (polypropylène, polyéthylène) sont évidemment également utilisables.

Lorsque la nappe entrante est un voile de carde de fibres discontinues, ou équivalente à un voile de carde, les fibres de structure sont mélangées intimement, c'est-à-dire fibres à fibres, avec des fibres de fixation, en amont de la carde selon une proportion prédéterminée. Techniquement, une telle disposition est facile à réaliser et la détermination d'une proportion optimale est également à la portée de l'homme du métier.

Conformément à une autre variante de réalisation de l'invention, dans le cas de mise en oeuvre d'une nappe entrante ne comportant pas de matériau de fixation, le procédé consiste à réaliser, à un poste de dépôt 40, 41, 42 en amont de l'élément plisseur 5, un dépôt de matériau de fixation sur la nappe entrante destinée à composer la structure du non-tissé en trois dimensions. Un tel dépôt de matériau de fixation est, par exemple, nécessaire si une nappe entrante composée d'un câble standard en polyester ou en polyamide est utilisée.

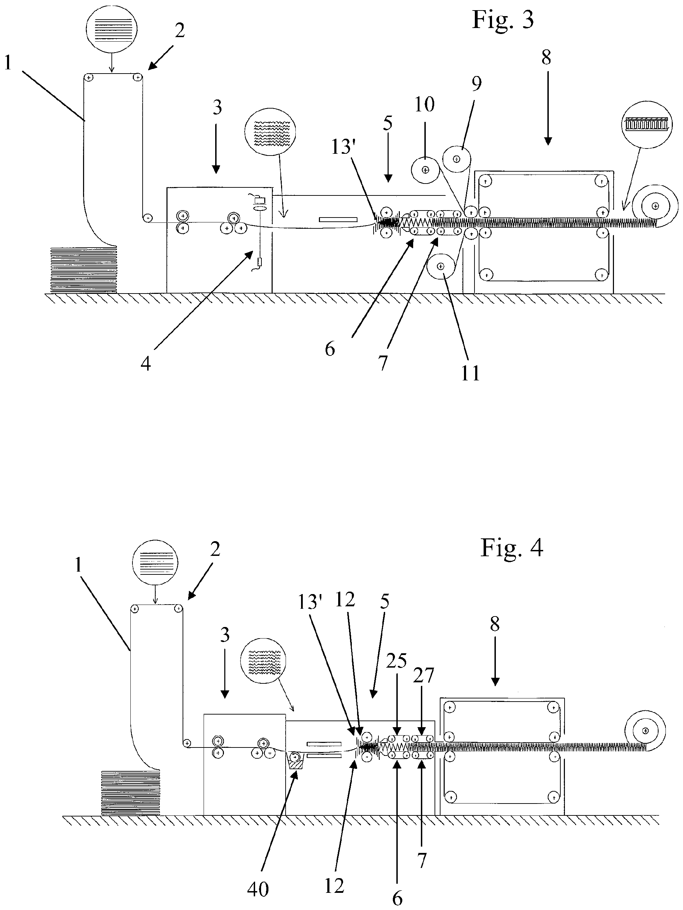

Le dépôt de matériau de fixation peut être réalisé par enduction au moyen d'une bâche d'encollage 40, par saupoudrage par l'intermédiaire d'un module de saupoudrage 41, ou encore par pulvérisation au moyen d'un module de pulvérisation 42, comme le montrent respectivement les figures 4, 5 et 6 et 7.

Dans le cas d'un dépôt par enduction ou par pulvérisation, le matériau de fixation est préalablement chauffé, afin qu'il soit liquide et puisse être appliqué, soit par un cylindre d'enduction de la bâche d'encollage 40, soit sous pression à travers des buses de pulvérisation 42' du module de pulvérisation 42, sur la nappe en mouvement. Un tel procédé est avantageusement réalisé par disposition des bâche 40 et module 42 en amont de l'élément plisseur 5, par exemple entre ledit l'élément plisseur 5 et le dispositif optique 4 de contrôle de la régularité de l'étalement de la nappe.

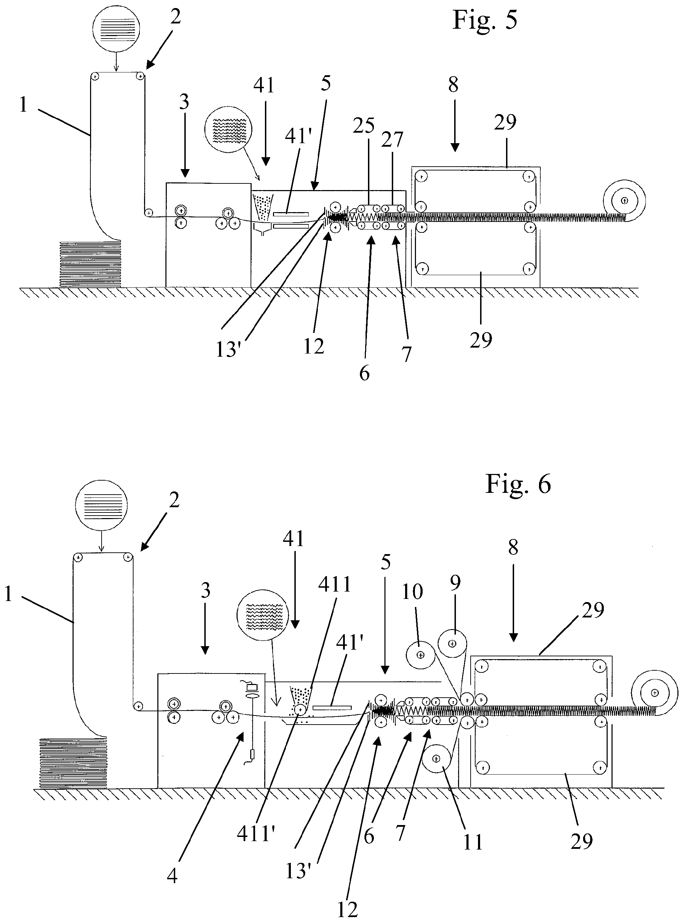

Le procédé de dépôt par saupoudrage au moyen du module 41 consiste à déposer par gravité une poudre de matériau low melt sur la nappe entrante de filaments continus constituant la structure, la nappe se déplaçant en dessous d'une trémie 411 du module de saupoudrage 41, ladite trémie étant équipée d'un cylindre structuré 411' (figure 6) ou non (figure 5), la nappe traversant ensuite une zone de chauffage 41', dans laquelle la poudre de matériau low melt atteint une température suffisante pour qu'elle se liquéfie et enrobe partiellement les filaments de structure, la nappe se refroidissant légèrement, en avançant vers l'élément plisseur 5, afin d'atteindre une température à laquelle le composant low melt est sur le point de se solidifier. Les lames de l'élément plisseur forment alors les plis qui se trouvent fixés par le matériau de fixation en phase de solidification (Formage à froid).

Selon un premier mode de réalisation de l'invention, la fixation préalable du pli est effectuée par un maintien en température de l'élément plisseur 5, en particulier de ses lames, de telle façon que les composants thermoplastiques ou le matériau de fixation de la nappe atteignent au moins leur température de ramollissement et que la fixation des plis au niveau des extrémités de lames soit assurée (formage à chaud). Cette solution présente l'avantage de ne fixer que les pics et les creux du non-tissé en trois dimensions, alors que les flancs restent inchangés et conservent donc toute leur souplesse.

Conformément à une variante de réalisation de l'invention, la fixation préalable du pli de la nappe peut également être réalisée par un chauffage de la nappe entrante, de manière à amener les composants thermoplastiques ou le matériau de fixation au moins à leur température de ramollissement, l'élément plisseur 5 restant froid. Une telle fixation préalable des plis est également effectuée essentiellement au niveau des pics et des creux. Ce mode de réalisation présente l'avantage d'être moins consommateur d'énergie, puisque l'on ne chauffe que la matière textile et non pas l'élément plisseur 5.

Les deux variantes proposées de fixation préalable des plis de la nappe entrante facilitent l'extraction du matériau plissé de l'élément plisseur 5. En effet, les plis étant marqués par les lames 13, le matériau plissé possède, immédiatement à la sortie de l'élément plisseur 5, une structure suffisamment compacte qui évite tout accrochage de fibres et toute remontée de fibres dans l'élément plisseur 5. Ainsi il est possible d'assurer une marche industrielle à grande vitesse de l'élément plisseur 5.

Il est particulièrement intéressant de constater qu'après une découpe du non-tissé en trois dimensions ainsi obtenu, il est facile, par effilochage à l'aide d'un loup carde, par exemple, d'extraire et d'individualiser les fibres constituant le matériau de structure, de sorte qu'elles deviennent immédiatement réutilisables en alimentation de carde.

L'élément plisseur 5 comporte deux têtes 12, sur lesquelles sont disposées des lames radiales fixes 13 ou orientables 13', la distance séparant les têtes étant réglable et conditionnant ainsi la hauteur du pli à obtenir. Par ailleurs, les têtes 12 sont interchangeables et sont équipées de lames interchangeables, de hauteurs différentes. Il est ainsi possible d'adapter les têtes 12 de l'élément plisseur 5 à la réalisation de non-tissés en trois dimensions de différentes hauteurs, en fonction des besoins.

Selon un premier mode de réalisation de l'invention, représenté aux figures 1, 2 et 15 des dessins annexés, les têtes 12 de l'élément plisseur 5 sont préférentiellement des tambours constitués par des cylindres creux, sur lesquels sont disposés les lames radiales fixes 13. Ces tambours présentent naturellement de grands moments de flexion ce qui les rend aptes à être utilisés pour de grandes largeurs de travail. Ainsi, il est possible de réaliser des lignes de fabrication présentant un arasement de plus de deux mètres, voire de cinq mètres.

Les lames radiales 13 sont montées sur les tambours constituant les têtes 12 de l'élément plisseur 5 en s'étendant chacune de manière parfaitement alignée avec le rayon correspondant du tambour ou encore de manière inclinée par rapport audit rayon.

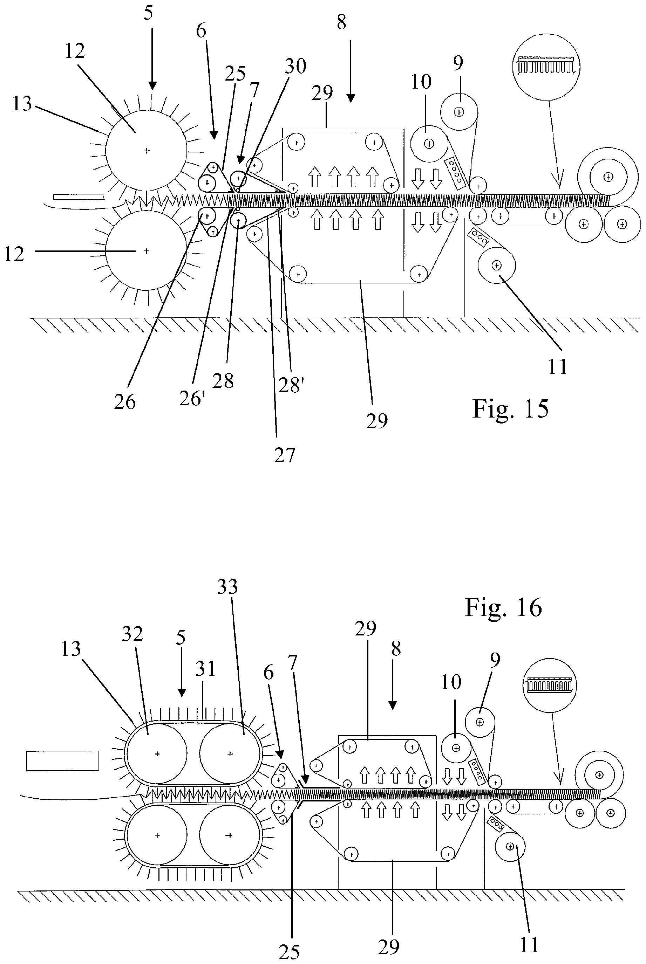

La figure 16 des dessins annexés représente une variante de réalisation de l'élément plisseur 5 à lames radiales fixes. Dans ce mode de réalisation, les lames 13 de chaque tête 12 sont disposées de manière fixe sur des éléments de transport 31 sans fin mais souples, tels que des chaînes, des maillons articulés, des courroies ou des manchons et les élément de transport coopèrent, à la manière de courroies avec des pignons, avec deux tambours 32 et 33, dont l'un au moins est motorisé. Cette variante de réalisation de l'élément plisseur 5 est particulièrement bien adaptée aux non-tissés en trois dimensions de faible épaisseur.

La vitesse de production d'un élément plisseur 5 à lames fixes n'est pas conditionnée par la cadence des lames exprimée en nombres de lames par minute car, du fait que les lames sont fixes par rapport au tambour, ou par rapport aux éléments de transport 31, elles n'entrent pas en contact avec d'autres éléments susceptibles d'affecter leur mouvement et, donc de limiter la cadence de l'élément plisseur 5. Il en résulte que la capacité d'une ligne de fabrication ainsi équipée est considérablement accrue et rend le procédé conforme à l'invention particulièrement compétitif par rapport aux procédés de fabrication de non-tissés en trois dimensions conventionnels.

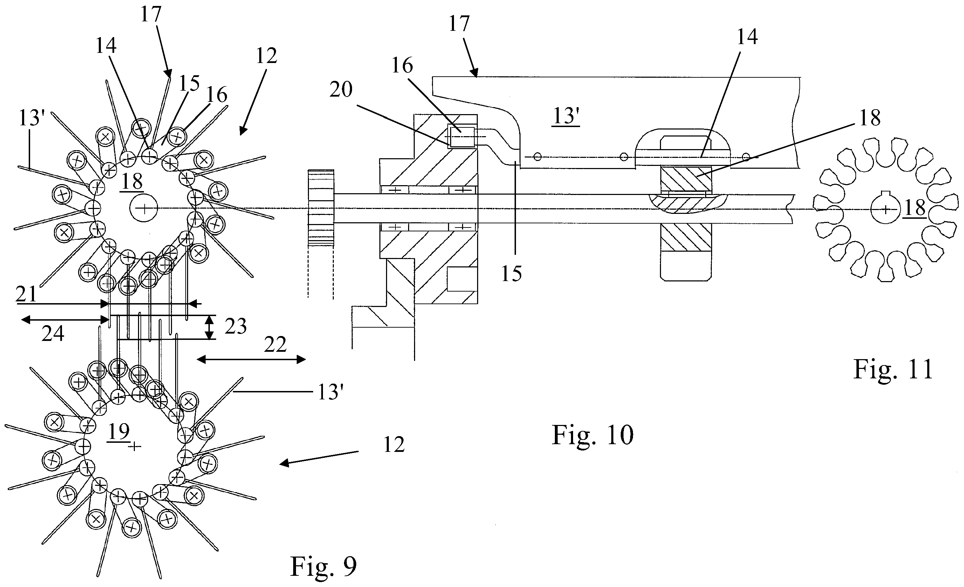

Les figures 9 à 11 des dessins annexés représentent des lignes de fabrication, dans lesquelles les lames radiales 13' de l'élément plisseur 5 sont orientables, c'est-à-dire que les lames 13', montées sur des roues 18, 19 constitutives des têtes 12, ne conservent pas la même orientation, selon la position dans laquelle elles se trouvent. On distingue successivement les zones suivantes : zone de préparation au plissage 24, zone effective de plissage 21, zone de transfert 22 et chemin de retour des lames.

Conformément à une caractéristique de l'invention, dans un tel cas, les lames 13' se présentent sous la forme de plaques ou de barres de très grande longueur et de faible largeur, la longueur des lames 13' étant légèrement supérieure à la largeur de la bande du voile à plisser. En outre, chaque lame 13' présente à une de ses extrémités, dans le sens de sa largeur, une articulation 14 et un bras manivelle 15 muni d'un galet de guidage 16 coopérant avec un chemin de came 20 et, à son extrémité opposée 17, une surface destinée à entrer en contact avec le voile à plisser. Les lames 13' sont disposées sur les roues 18 et 19 de telle manière que chacune de leurs extrémités 17 s'étende vers l'extérieur de chacune des roues 18 et 19. Les lames 13' sont articulées en 14 et, en fonctionnement, le point d'articulation 14 de chaque lame 13' décrit une trajectoire circulaire, qui assure qu'à la fin d'un cycle, chaque lame 13' retrouve la position initiale qu'elle avait au début du cycle. Ainsi l'inclinaison de la lame 13' est conférée par le profil du chemin de came 20, qui détermine la position angulaire du galet de guidage 16 par rapport au point d'articulation 14 de la lame 13'.

Selon une caractéristique de l'invention, le profil du chemin de came 20 est déterminé de manière à conférer aux lames 13', par coopération avec le galet de guidage 16 de chaque lame 13', une inclinaison desdites lames presque perpendiculairement à la trajectoire d'entrée du voile à plisser, dans une zone effective de plissage 21. Dans ladite zone de plissage 21, le voile plissé est maintenu et convoyé jusqu'à une zone de transfert 22. Les lames 13' de la roue 18 croisent les lames 13' de la roue 19, de sorte que dans cette zone effective de plissage 21 la distance séparant les extrémités 17 des lames 13' de la roue 18 des extrémités 17 des lames 13' de la roue 19 reste la plus constante possible, mais également que chaque lame 13' de la roue 18 soit disposée presque au milieu de l'intervalle existant entre chaque lame 13' de la roue 19 et que lesdites lames 13' des roues 18 et 19 s'interpénètrent.

Ainsi, dans la zone 21 effective de plissage chaque lame 13' de la roue 18 est disposée au milieu ou pratiquement au milieu de l'intervalle existant entre deux lames 13' successives de la roue 19 et pour modifier la hauteur du pli formé dans le voile à plisser, il suffira de modifier la valeur 23 de l'interpénétration (figure 9) entre les lames 13' des roues 18 et 19. La valeur 23 de l'interpénétration des lames 13' correspond à la distance mesurée pratiquement perpendiculairement aux lames 13' et séparant les extrémités 17 des lames 13' des roues 18 et 19. La valeur 23 de l'interpénétration des lames 13' déterminera, en combinaison avec le pas des lames 13', c'est-à-dire en prenant à peu près en considération la distance séparant les points d'articulation 14 de deux lames 13' consécutives, la longueur du pli qui sera formé dans le voile à plisser.

La zone effective de plissage 21 est précédée par une zone 24 de préparation au plissage, dans laquelle l'inclinaison des lames 13' des roues 18 et 19 est progressivement modifiée de telle manière que la distance séparant les extrémités 17 des lames 13' de la roue 18 de celles des lames 13' de la roue 19 reste la plus constante possible. Vers la fin de la zone de préparation au plissage 24, l'inclinaison des lames 13' de chaque roue 18 et 19 est modifiée de telle manière qu'elles soient disposées parallèles les unes par rapport aux autres (figure 9).

Ce changement d'inclinaison est obtenu de la même manière que celle décrite précédemment par modification de la position angulaire du galet 16 par rapport au point d'articulation 14 des lames 13'. Dans cette zone de préparation au plissage 24, les extrémités 17 des lames 13' de la roue 18 sont également progressivement rapprochées des extrémités 17 des lames 13' de la roue 19. Ainsi dans la zone de préparation au plissage 24, les lames 13' des roues 18 et 19 entrent inclinées et sont disposées progressivement presque parallèles les unes par rapport aux autres et leurs extrémités 17 se rapprochent progressivement les unes des autres, puis elles s'interpénètrent jusqu'à atteindre la valeur d'interpénétration 23 déterminée par la géométrie de la zone effective de plissage 21. Il s'ensuit que le voile à plisser est plissé progressivement jusqu'à atteindre la longueur de pli déterminée par la géométrie de la zone effective de plissage 21.

Lors de cette opération de formation des plis, le voile à plisser est déplacé par l'extrémité 17 des lames 13'. La géométrie de la zone de préparation au plissage 24 est telle que l'on cherche à éviter le déplacement relatif du voile à plisser par rapport à l'extrémité 17. Toutefois, dans le cas où un tel déplacement se produit quand même, il s'effectue en exerçant le minimum de contrainte sur le voile à plisser de manière à ne pas le détériorer. A cet effet, les lames 13' présentent à leur extrémité 17 une surface destinée à entrer en contact avec le voile à plisser. Cette surface peut être formée en un matériau assurant un coefficient de frottement très faible entre ledit matériau et le voile à plisser. De préférence, cette surface sera en acier poli ou en acier recouvert de céramique. En variante, ladite surface peut être sous la forme d'un cylindre libre en rotation et de faible moment d'inertie.

La géométrie et en particulier la longueur de la zone de préparation au plissage 24 sont déterminées en fonction de la résistance du voile à plisser. Ainsi, dans le cas de voiles à plisser de faible résistance, il convient de réaliser l'opération de plissage très progressivement, afin de ne pas détériorer ledit voile à plisser et une zone de préparation au plissage 24 de grande longueur sera préférentiellement utilisée, afin de réduire le plus possible les contraintes subies par le voile à plisser.

La zone effective de plissage 21 est prolongée par une zone de transfert 22, dans laquelle les lames 13' des roues 18 et 19 sont progressivement écartées du voile plissé. Le chemin de came 20 des galets de guidage 16, qui assure le pivotement des lames 13' est constitué de telle sorte que les lames 13' des roues 18 et 19 restent presque parallèles les unes par rapport aux autres, tant que celles-ci sont en contact avec le voile plissé. Les lames 13' glissent le long des plis formés dans le voile plissé jusqu'à leur extraction complète du voile plissé.

Lors de leur mouvement d'extraction du voile plissé, il est nécessaire d'assurer que les lames 13' exercent le moins de contraintes possibles sur le voile, afin de ne pas le détériorer.

Après leur extraction complète du voile plissé, les lames 13' sont pivotées, de manière progressive, de la position presque parallèle qu'elles avaient lorsqu'elles étaient en contact avec le voile plissé à une position angulaire, telle qu'elle pourront être facilement déplacées le long de leur chemin de retour vers la zone de préparation au plissage 24. Cette position angulaire est préférentiellement telle que les lames 13' sont perpendiculaires à la trajectoire de leurs points d'articulation 14. D'autres positions angulaires sont, cependant, également possibles.

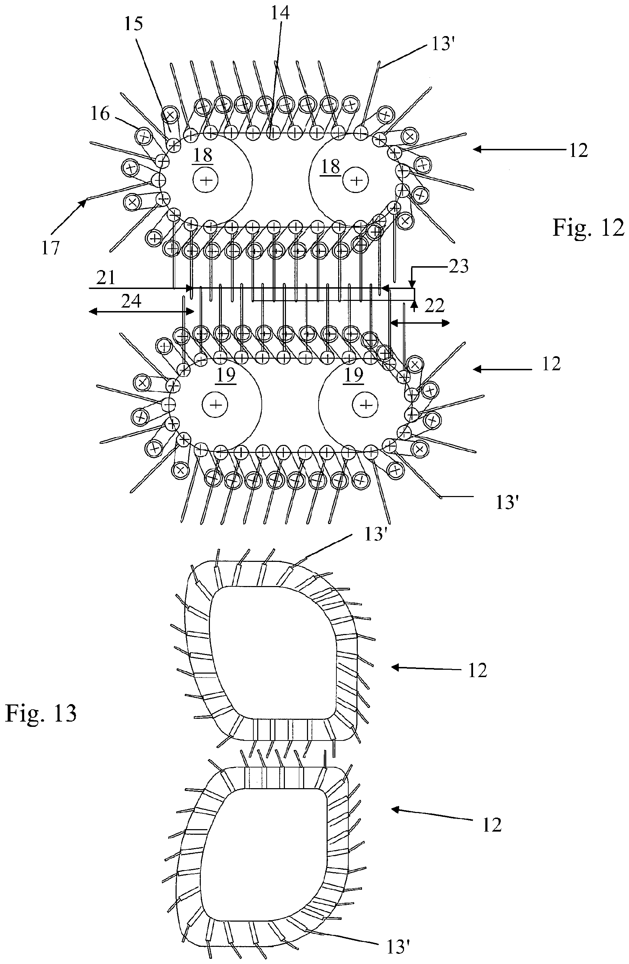

Les figures 12 et 13 des dessins annexés représentent d'autres variantes de réalisation de l'élément plisseur à lames orientables 13', à savoir, respectivement du type connu sous la dénomination Gills à chaînes et Gills Soleil. D'autres dispositifs, de technologie comparable, peuvent également être mis en oeuvre, à savoir du type connu sous la dénomination d'Intersecting à Vis ou encore de Push Bars.

Dans le cas de la mise en oeuvre d'une technologie du type Gills à chaînes (figure 12), les têtes 12 sont sous la forme de chenilles de Gills à chaînes et les points d'articulation 14 des lames 13' sont déplacés au moyen des maillons des chaînes, qui sont actionnées en déplacement par des pignons à chaîne. La particularité d'une telle technologie, contrairement à celle décrite à propos des dispositifs à roues, est de permettre aux articulations des lames 13' de suivre des trajectoires autres que de simples trajectoires circulaires. Ainsi, il est possible, par exemple, de contraindre les articulations 14 à suivre une trajectoire rectiligne de grande longueur dans la zone de plissage 21, de manière à augmenter la durée de maintien des plis de la nappe entrante.

Dans le mode de réalisation suivant la figure 13, les têtes 12 sont sous la forme de têtes de Gills soleil munies de roues (non représentées) qui déplacent les lames 13' en rotation, lesdites lames 13' étant guidées en déplacement radial par l'intermédiaire de leurs extrémités longitudinales traversant des rainures de guidage radial et coopérant avec un chemin de came. Dans ce mode de réalisation, les lames 13' se présentent sous la forme de barrettes, libres les unes par rapport aux autres et pouvant glisser dans des rainures de guidages aménagées à l'intérieur des roues d'entraînement. L'inclinaison des rainures est telle que dans la zone de plissage 21, les lames 13' de chaque roue sont disposées parallèlement les unes par rapport aux autres.

Dans le cas de la mise en oeuvre d'une technologie du type Intersectings à Vis (non représentée dans les dessins annexés), les lames 13' sont déplacées, dans le sens de progression de la nappe plissée en formation, par des vis d'entraînement, dont le pas de vis conditionne l'écartement des plis. A l'extrémité de chaque vis, les lames sont extraites des vis et chassées par des marteaux puis freinées pour s'insérer dans le filet des vis d'entraînement en sens inverse. A l'extrémité des vis d'entraînement en sens inverse, d'autres marteaux chassent les lames vers les premières vis. La trajectoire des lames est dite «carrée».

Lorsqu'une technologie du type Push Bar (non représentée dans les dessins annexés) est mise en oeuvre, les lames 13' ne sont pas insérées dans le filet de vis et déplacées par ces vis, mais sont jointives au niveau de leur talon, et espacées par leur talon. Ces lames sont alors poussées les unes contre les autres et glissent le long de guides rectilignes. A l'extrémité des guides rectilignes, elles suivent une trajectoire circulaire qui leur est conférée par des roues dentées, dont les dents s'insèrent entre les talons de deux barrettes successives.

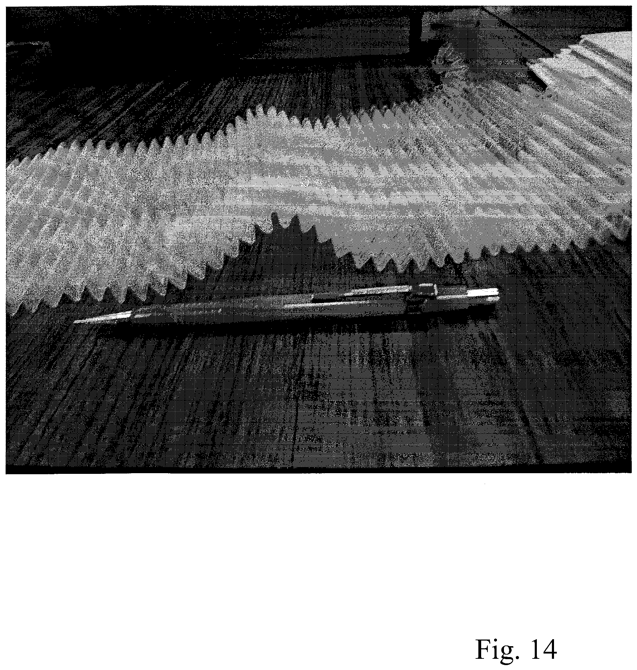

La figure 14 des dessins annexés est une représentation photographique d'un produit obtenu en sortie l'élément plisseur 5.

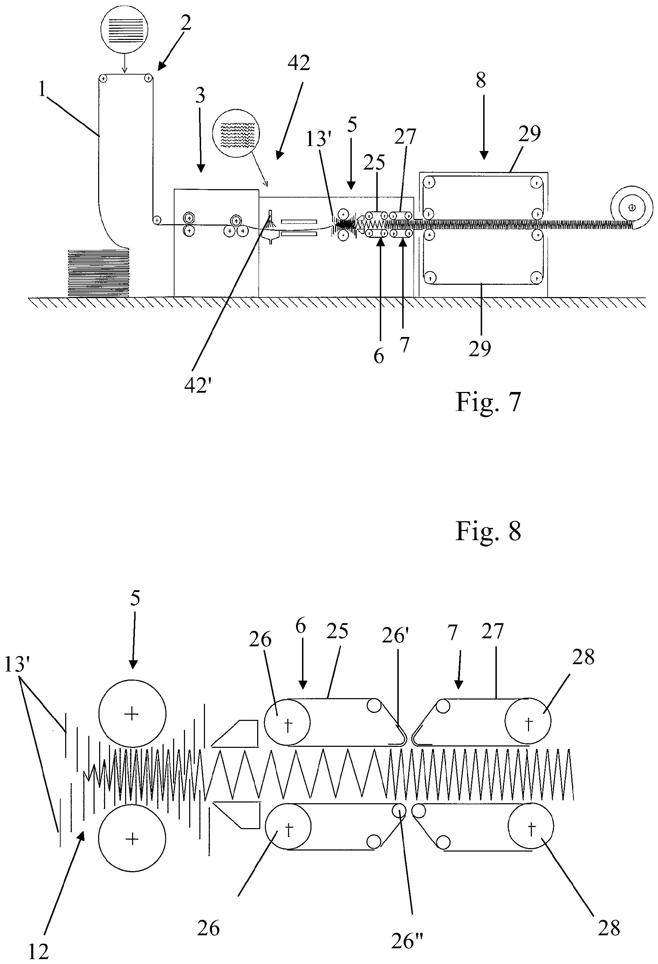

La nappe entrante qui a été plissée et dont les pics et les creux sont marqués suffisamment est extraite de l'élément plisseur 5, quelle que soit la configuration de ce dernier, à savoir à lames fixes 13 ou orientables 13', par un dispositif d'extraction 6 (Fig. 1 et 2). Ce dernier se compose préférentiellement d'un couple de deux manchons 25 superposés mais espacés les uns des autres d'une distance qui est en relation directe avec la valeur d'interpénétration 23 et dont la vitesse linéaire de déplacement est légèrement supérieure à la vitesse de sortie de l'élément plisseur. Ces manchons 25 sont généralement tendus entre deux cylindres 26 (figures 1 à 7). Cependant, selon une variante de réalisation de réalisation de l'invention, représentée à la figure 8 des dessins annexés, il est également possible de remplacer les cylindres avals 26 des manchons 25 par des becs fixes 26' ou par des becs à rouleaux 26".

Le dispositif d'extraction 6 est prolongé par un dispositif de compression 7 (figures 1 à 8), qui est constitué par un ensemble de deux manchons 27 tendus entre deux cylindres 28 superposés, dont la vitesse linéaire de déplacement est inférieure à celle du dispositif d'extraction 6, ceci afin d'assurer une compression du matériau. La valeur de cette compression, qui peut s'exprimer en nombre de plis par unité de longueur, est fonction du rapport de vitesse entre les manchons 25 du dispositif d'extraction 6 et 27 du dispositif de compression 7.

Selon une variante de réalisation de l'invention représentée à la figure 15 des dessins annexés, les cylindres avals 28 sont remplacés par des becs fixes 28'. Ces cylindres avals 28 peuvent également être remplacés par des becs à rouleaux (non représentés). En outre, dans ce mode de réalisation, le dispositif de compression comporte pour chacun de ses manchons, un cylindre de détour 30 disposé entre le cylindre amont 28 et le bec fixe 28' ou à rouleaux. Ces cylindres de détour 30 des dispositifs de compression 7 sont préférentiellement placés immédiatement en aval des becs fixes 26' ou à rouleaux 26" du dispositif d'extraction 6.

Les cylindres amonts 28 du dispositif de compression 7 sont disposés eux-mêmes en amont des becs 26' ou 26" du dispositif d'extraction 6, de telle manière que la trajectoire de chaque manchon 27 du dispositif de compression 7 soit parallèle à la trajectoire de chaque manchon 25 du dispositif d'extraction 6, au moins dans la zone située entre le cylindre amont 28 et le bec 26' ou 26" du dispositif d'extraction 6. Cette particularité de la trajectoire des manchons permet de réduire les risques d'enroulement de fibres ou de filaments autour des manchons des dispositifs d'extraction et de compression. En effet, du fait que le cylindre amont 28 s'étend avant le bec 26' ou 26" du dispositif d'extraction 6, les fibres ou filaments sortant de ce dernier à une vitesse supérieure à leur vitesse d'entraînement dans le dispositif de compression 7 qui auraient tendance à s'échapper à travers la zone intermédiaire entre le dispositif d'extraction 6 et le dispositif de compression 7 en formant un bourrage, entrent en contact avec la partie de manchon 27 correspondante du dispositif de compression 7 et sont progressivement ramenées dans ledit dispositif de compression 7.

La figure 16 des dessins annexés représente une variante de réalisation du dispositif de compression 7, dans laquelle ce dernier est constitué par un ensemble de plaques supérieure et inférieure chargées de comprimer le matériau plissé et de le conduire jusqu'à un poste de traitement en aval.

Dans un tel cas et en présence d'un dispositif de compression 7 selon la figure 16, la valeur de compression est conditionnée par la vitesse des tapis du four de fixation lui-même. Selon l'état de surface des plaques et en fonction de leur position l'une par rapport à l'autre, le matériau plissé peut être plus ou moins freiné de façon à le compresser plus ou moins. A cet effet les plaques supérieures et inférieures peuvent être parallèles, ou convergentes, voire courbes.

Le matériau plissé obtenu en sortie du dispositif de compression 7 présente une structure assez ouverte avec un faible nombre de plis par unité de longueur et peut éventuellement être utilisé tel quel en sortie dudit dispositif de compression. Cependant, pour l'obtention de non-tissés en trois dimensions plus compacts, il est nécessaire de consolider le matériau plissé issu du dispositif de compression 7.

A cet effet, conformément à une autre caractéristique de l'invention et comme le montrent les figures 1 à 7, 15 et 16, le procédé comporte, en outre, une étape consistant à déplacer le matériau plissé dans un four à air chaud 8, du type à air traversant (figures 15 et 16) ou du type presse à tapis(figures 1 à 7).

Les fours 8 mis en oeuvre dans la ligne de fabrication conforme à l'invention sont avantageusement constitués par deux tapis 29 affectés d'une vitesse de déplacement linéaire très proche de celle des manchons 27 du dispositif de compression 7, de sorte que le non-tissé en trois dimensions peut être extrait de la zone de compression sans risque d'accrochage des fibres ou des filaments. Selon une caractéristique de l'invention, lorsqu'un four à air chaud traversant est mis en oeuvre, les tapis perforés 29 présentent une perméabilité suffisante pour autoriser le passage d'air chaud (figures 15 et 16).

Dans un autre type de four 8, les tapis 29 peuvent être, selon un autre mode de réalisation de l'invention, non perméables à l'air, du type presse à tapis, le chauffage étant alors réalisé par des résistances électriques placées au plus près des tapis (figures 1 à 7). Enfin, il est aussi possible d'effectuer un apport d'énergie calorifique dans le four 8 par d'autres moyens, à savoir par convection thermique, par rayonnement infrarouge ou par agitation électronique à haute fréquence, par exemple.

En outre, il est possible de réaliser un contrecollage d'un matériau de revêtement sur la structure plissée, tel qu'un tissu de décoration 9 sur la face visible, ou face supérieure, du non-tissé en trois dimensions, par l'intermédiaire d'un film thermoadhésif 10, la face non visible, ou face inférieure, étant pourvue d'un non-tissé calandré léger thermoadhésif 11. Bien entendu, il est également possible de munir les deux faces du non-tissé en trois dimensions d'un revêtement identique, ou de ne revêtir qu'une seule face.

Lorsque le four 8 utilisé est du type à air chaud traversant (figures 15 et 16) et si un contrecollage d'un matériau de revêtement, tel qu'un tissu peu perméable à l'air, sur la structure plissée est à effectuer, ledit contrecollage peut être effectué en sortie du four 8.

Après les opérations de fixation définitive et de pose de revêtements sur les faces supérieure et/ou inférieure, le produit non-tissé en trois dimensions obtenu peut être conditionné en plaques ou en rouleaux.

L'invention a également pour objet un produit non-tissé en trois dimensions obtenu par mise en oeuvre du procédé conforme à l'invention au moyen d'une ligne de fabrication conforme à l'invention.

Ce produit est caractérisé en ce qu'il est constitué par une nappe de fibres comportant une part de fibres synthétiques thermoplastiques ou un matériau de fixation et en ce qu'il présente des plis essentiellement verticaux, formés par une fixation préalable des pics et des creux de la nappe.

Conformément à une caractéristique de l'invention, ce produit peut être pourvu, sur au moins une face, d'un revêtement sous forme d'un tissu de décoration 9 collé à l'aide d'un film thermoadhésif 10 sur la structure plissée, ou encore sous forme d'un non tissé calandré léger thermoadhésif 11, ou d'autres types de matériaux contrecollés sur la face supérieure et/ou inférieure. Bien entendu, ces revêtements peuvent également être combinés.

Le produit conforme à l'invention peut être conditionné soit en plaques, soit en rouleaux

Grâce à l'invention, il est possible de réaliser, au moyen d'une ligne de fabrication de conception et de fabrication aisées et donc d'un faible coût de revient, des produits présentant une structure parfaitement verticale, dont la résilience est remarquablement élevée et qui sont durables par rapport aux produits équivalents actuellement disponibles sur le marché.

La densité de ces produits est facilement réglable par changement de vitesse du dispositif de compression et leur coût de fabrication est peu élevé. En outre, ces produits sont facilement recyclables.

Bien entendu, l'invention n'est pas limitée aux modes de réalisation décrits et représentés aux dessins annexés. Des modifications restent possibles, notamment du point de vue de la constitution des divers éléments, sans sortir pour autant du domaine de la protection de l'invention.

La densité de ces produits est facilement réglable par changement de vitesse du dispositif de compression et leur coût de fabrication est peu élevé. En outre, ces produits sont facilement recyclables.

## Revendications

1. Procédé de fabrication de non-tissé en trois dimensions **caractérisé en ce qu'**il consiste à réaliser au moyen d'un élément plisseur (5) coopérant avec un dispositif d'extraction (6) qui se compose d'un couple de deux manchons (25) dont la vitesse linéaire de déplacement est légèrement supérieure à la vitesse de sortie de l'élément plisseur (5), à partir d'une nappe entrante comprenant une part de fibres thermoplastiques ou de matériau de fixation, une fixation préalable du pli de la nappe entrante, en forme de pics et de creux, obtenu par des lames s'étendant radialement sur des têtes de l'élément plisseur (5), cette fixation préalable étant effectuée, soit par un maintien en température de l'élément plisseur (5) lui-même, soit par un chauffage de la nappe entrante.

2. Procédé, suivant la revendication 1, **caractérisé en ce que** la nappe entrante est constituée partiellement ou totalement par des fibres synthétiques, par exemple mélangée avec d'autres fibres naturelles, minérales ou artificielles.

3. Procédé, suivant la revendication 1, **caractérisé en ce que** la nappe entrante est sous la forme d'un voile de carde, d'un voile étalé nappé issu d'un étaleur nappeur, voire étiré successivement.

4. Procédé, suivant la revendication 1, **caractérisé en ce que** la nappe entrante est composée de fils BCF (Bulky Continuous Filament) ou de filés de fibres.

5. Procédé, suivant la revendication 1, **caractérisé en ce que** la nappe entrante est constituée sous forme d'une nappe de filaments continus juxtaposés parallèlement les uns par rapport aux autres.

6. Procédé, suivant la revendication 1, **caractérisé en ce que** la nappe entrante provient d'une installation d'extrusion filage du type spun bond ou melt blown ou encore d'une balle de câble.

7. Procédé, suivant la revendication 1, **caractérisé en ce que** la fixation préalable du pli est effectuée par un maintien en température de l'élément plisseur (5), en particulier de ses lames, de telle façon que les composants thermoplastiques ou le matériau de fixation de la nappe atteignent au moins leur température de ramollissement et que la fixation des plis au niveau des extrémités de lames soit assurée.

8. Procédé, suivant la revendication 1, **caractérisé en ce que** la fixation préalable du pli de la nappe est réalisée par un chauffage de la nappe entrante, de manière à amener les composants thermoplastiques ou le matériau de fixation au moins à leur température de ramollissement, l'élément plisseur (5) restant froid.

9. Procédé, suivant la revendication 1, **caractérisé en ce que**, dans le cas de mise en oeuvre d'une nappe entrante ne comportant pas de matériau de fixation, il consiste à réaliser, à un poste de dépôt (40, 41, 42) en amont de l'élément plisseur (5), un dépôt de matériau de fixation sur la nappe entrante destinée à composer la structure du non-tissé en trois dimensions.

10. Procédé, suivant la revendication 1, **caractérisé en ce que** le dispositif d'extraction (6) est prolongé par un dispositif de compression (7), qui est constitué par un ensemble de deux manchons (27) tendus entre deux cylindres (28) superposés, dont la vitesse linéaire de déplacement est inférieure à celle du dispositif d'extraction (6), ceci afin d'assurer une compression du matériau.

11. Ligne de fabrication pour la mise en oeuvre du procédé suivant l'une quelconque des revendication 1 à 10, ladite ligne comprenant un élément plisseur (5) comportant au moins deux têtes (12), tambours ou axes équipés de lames radiales fixes (13) ou orientables (13'), qui s'entrecroisent, et un dispositif d'extraction (6), **caractérisée en ce que** le dispositif d'extraction (6) se compose d'un couple de deux manchons (25) tendus entre deux cylindres (26), superposés mais espacés les uns des autres d'une distance qui est en relation directe avec la valeur d'interpénétration (23) entre les lames (13, 13') dont la vitesse linéaire de déplacement est légèrement supérieure à la vitesse de sortie de l'élément plisseur (5), les cylindres avals (26) des manchons (25) étant remplacés par des becs fixes (26') ou par des becs à rouleaux (26") et **en ce que** le dispositif d'extraction (6) est prolongé soit par un dispositif de compression (7), qui est constitué par un ensemble de deux manchons (27) tendus entre deux cylindres (28) superposés, dont la vitesse linéaire de déplacement est inférieure à celle du dispositif d'extraction (6), afin d'assurer une compression du matériau, soit par un dispositif de compression, qui est constitué par un ensemble de plaques supérieure et inférieure chargées de comprimer le matériau plissé et de le conduire jusqu'à un poste de traitement en aval.

12. Ligne de fabrication, suivant la revendication 11, **caractérisée en ce que** l'élément plisseur (5) comporte deux têtes (12) sur lesquelles sont disposées des lames radiales fixes (13) ou orientables (13'), la distance séparant les têtes étant réglable et conditionnant ainsi la hauteur du pli à obtenir et **en ce que** les têtes (12) de l'élément plisseur (5) sont des tambours constitués par des cylindres creux, sur lesquels sont disposés les lames radiales fixes (13).

13. Ligne de fabrication, suivant la revendication 11, **caractérisée en ce que** les lames (13) de chaque tête (12) sont disposées de manière fixe sur des éléments de transport (31) sans fin mais souples, tels que des chaînes, des maillons articulés, des courroies ou des manchons et les élément de transport coopèrent, à la manière de courroies avec des pignons, avec deux tambours (32 et 33), dont l'un au moins est motorisé.

14. Ligne de fabrication, suivant la revendication 11, **caractérisée en ce que** l'élément plisseur (5) comporte deux têtes (12) sur lesquelles sont disposées des lames radiales orientables (13'), la distance séparant les têtes étant réglable et conditionnant ainsi la hauteur du pli à obtenir et **en ce que** lesdites lames (13'), montées sur des roues (18, 19) constitutives des têtes (12), ne conservent pas la même orientation, selon la position dans laquelle elles se trouvent.

15. Ligne de fabrication, suivant la revendication 11, **caractérisée en ce qu'**elle comporte, en outre, un four à air chaud (8) constitué par deux tapis affectés d'une vitesse de déplacement linéaire très proche de celle des manchons (27) du dispositif de compression (7).

## Patentansprüche

1. Verfahren zur Herstellung von dreidimensionalem Vliesstoff, **dadurch gekennzeichnet, dass** es darin besteht, mit Hilfe eines Faltelementes (5), das mit einer Auszugvorrichtung (6) zusammenwirkt, die aus einem Paar zweier Hülsen (25) besteht, deren lineare Fortbewegungsgeschwindigkeit geringfügig höher ist, als die Austrittsgeschwindigkeit aus dem Faltelement (5), aus einem einlaufenden Faserflor, der einen Teil thermoplastischer Fasern oder Fixiermaterial enthält, eine vorläufige Fixierung der Faltung des einlaufenden Faserflors in Form von Spitzen und Vertiefungen auszuführen, die durch Klingen erzielt wird, die radial auf Köpfen des Faltelementes (5) verlaufen, wobei diese vorläufige Fixierung entweder durch Warmhalten des Faltelementes (5) selbst erfolgt oder durch Erwärmung des einlaufenden Faserflors.

2. Verfahren nach Patentanspruch 1, **dadurch gekennzeichnet, dass** der einlaufende Faserflor teilweise oder vollständig aus Synthetikfasern besteht, beispielsweise gemischt mit anderen Natur-, Mineral- oder Kunstfasern.

3. Verfahren nach Patentanspruch 1, **dadurch gekennzeichnet, dass** der einlaufende Faserflor die Form eines Kardenflors oder eines aus einem Vliesleger stammenden Legerflors hat oder auch anschließend gestreckt wurde.

4. Verfahren nach Patentanspruch 1, **dadurch gekennzeichnet, dass** der einlaufende Faserflor aus BCF-Garn (Bulky Continuous Filament) oder Fasergarn besteht.

5. Verfahren nach Patentanspruch 1, **dadurch gekennzeichnet, dass** der einlaufende Faserflor aus einer Bahn parallel nebeneinanderliegender Endlosfasern besteht.

6. Verfahren nach Patentanspruch 1, **dadurch gekennzeichnet, dass** der einlaufende Faserflor aus einer Extrusionsspinnanlage des Typs Spunbond oder Meltblown oder auch aus einem Zwirnballen stammt.

7. Verfahren nach Patentanspruch 1, **dadurch gekennzeichnet, dass** die vorläufige Fixierung der Faltung durch Warmhalten des Faltelementes (5), insbesondere seiner Klingen, erfolgt, derart, dass die thermoplastischen Bestandteile oder das Fixiermaterial des Faserflors mindestens ihre Erweichungstemperatur erreichen, und dass die Fixierung der Falten im Bereich der Klingenenden sichergestellt ist.

8. Verfahren nach Patentanspruch 1, **dadurch gekennzeichnet, dass** die vorläufige Fixierung der Faltung durch Erwärmung des einlaufenden Faserflors erfolgt, derart, dass die thermoplastischen Bestandteile oder das Fixiermaterial des Faserflors mindestens auf ihre Erweichungstemperatur gebracht werden, während das Faltelement (5) kalt bleibt.

9. Verfahren nach Patentanspruch 1, **dadurch gekennzeichnet, dass** es im Fall der Verwendung eines einlaufenden Faserflors, der kein Fixiermaterial enthält, darin besteht, in einer Auftragestation (40, 41, 42) vor dem Faltelement (5) Fixiermaterial auf den einlaufenden Faserflor aufzutragen, der dazu bestimmt ist, die Struktur des dreidimensionalen Vliesstoffes zu bilden.

10. Verfahren nach Patentanspruch 1, **dadurch gekennzeichnet, dass** auf die Auszugvorrichtung (6) eine Komprimiervorrichtung (7) folgt, die aus einer Einheit aus zwei Hülsen (27) besteht, die zwischen zwei übereinander angeordnete Zylinder (28) gespannt sind, deren lineare Fortbewegungsgeschwindigkeit niedriger ist, als die der Auszugvorrichtung (6), um eine Komprimierung des Materials sicherzustellen.

11. Fertigungsstraße zur Anwendung des Verfahrens nach irgendeinem der Patentansprüche 1 bis 10, die ein Faltelement (5) umfasst, das mindestens zwei Köpfe (12), Walzen oder Achsen aufweist, die mit radialen, feststehenden (13) oder orientierbaren (13') Klingen versehen sind, die sich kreuzen, sowie eine Auszugvorrichtung (6), **dadurch gekennzeichnet, dass** die Auszugvorrichtung (6) aus einem Paar zweier Hülsen (25) besteht, die zwischen zwei Zylinder (26) gespannt sind, die übereinander angeordnet, aber voneinander um einen Abstand beabstandet sind, der in direkter Beziehung zum Wert der gegenseitigen Durchdringung (23) der Klingen (13, 13') steht, deren lineare Fortbewegungsgeschwindigkeit geringfügig höher ist, als die Austrittsgeschwindigkeit aus dem Faltelement (5), wobei die nachfolgenden Zylinder (26) der Hülsen (25) durch feststehende Spitzen (26') oder durch Spitzen mit Rollen (26") ersetzt sind, und dadurch, dass auf die Auszugvorrichtung (6) entweder eine Komprimiervorrichtung (7) folgt, die entweder aus einer Einheit aus zwei Hülsen (27) besteht, die zwischen zwei übereinander angeordnete Zylinder (28) gespannt sind, deren lineare Fortbewegungsgeschwindigkeit niedriger ist, als die der Auszugvorrichtung (6), um eine Komprimierung des Materials sicherzustellen, oder eine Komprimiervorrichtung, die aus einer Einheit oberer und unterer Platten besteht, die dazu dienen, das gefaltete Material zu komprimieren und es zu einer nachfolgenden Bearbeitungsstation zu führen.

12. Fertigungsstraße nach Patentanspruch 11, **dadurch gekennzeichnet, dass** das Faltelement (5) zwei Köpfe (12) aufweist, auf denen radiale, feststehende (13) oder orientierbare (13') Klingen angeordnet sind, wobei der Abstand zwischen den Köpfen einstellbar ist und so die Höhe der zu erzielenden Faltung bedingt, und dadurch, dass die Köpfe (12) des Faltelementes (5) Walzen sind, die aus Hohlzylindern bestehen, auf denen die feststehenden, radialen Klingen (13) angeordnet sind.

13. Fertigungsstraße nach Patentanspruch 11, **dadurch gekennzeichnet, dass** die Klingen (13) jedes Kopfes (12) feststehend auf nachgiebigen Endlostransportteilen (31), wie etwa Ketten, gelenkig verbundenen Gliedern, Riemen oder Hülsen, angeordnet sind, und die Transportteile in der Art von Riemen mit Ritzeln, mit zwei Walzen (32 und 33) zusammenwirken, von denen mindestens eine motorisiert ist.

14. Fertigungsstraße nach Patentanspruch 11, **dadurch gekennzeichnet, dass** das Faltelement (5) zwei Köpfe (12) aufweist, auf denen radiale, orientierbare Klingen (13') angeordnet sind, wobei der Abstand zwischen den Köpfen einstellbar ist und so die Höhe der zu erzielenden Faltung bedingt, und dadurch, dass die genannten, auf Rädern (18, 19), die die Köpfe (12) bilden, montierten Klingen (13'), je nach der Stellung, in der sie sich befinden, nicht dieselbe Orientierung beibehalten.

15. Fertigungsstraße nach Patentanspruch 11, **dadurch gekennzeichnet, dass** sie außerdem einen Heißluftofen (8) aufweist, der aus zwei Bändern besteht, deren lineare Fortbewegungsgeschwindigkeit der der Hülsen (27) der Kompressionsvorrichtung (7) sehr nahe ist.

## Claims

1. A process for the manufacture of a three-dimensional non-woven material **characterised in that** it consists in producing by means of a folding device (5) working together with an extraction device (6) consisting of a pair of sleeves (25) whose linear movement speed is slightly greater than the speed of exit from the folding device (5), from an incoming sheet comprising one part thermoplastic fibres or fixing material, prior fixing of the fold in the incoming sheet in the form of peaks and troughs, produced by blades projecting radially from heads of the folding device (5), the prior fixing being made either by heating the folding device (5) itself, or by heating the incoming sheet.

2. A process according to claim 1, **characterised in that** the incoming sheet consists partially or totally of synthetic fibres, for example mixed with other natural, mineral or artificial fibres.

3. A process according to claim 1, **characterised in that** the incoming sheet is in the form of a card web, a coated web from a laying device, or even coated later.

4. A process according to claim 1, **characterised in that** the incoming sheet consists of BCF (Bulky Continuous Filament) threads or spun yarn.

5. A process according to claim 1, **characterised in that** the incoming sheet is in the form of a sheet of continuous juxtaposed strands parallel to each other.

6. A process according to claim 1, **characterised in that** the incoming sheet is derived from an extrusion spinning device of the spun bond or melt blown type or from a ball of cable.

7. A process according to claim 1, **characterised in that** the prior fixing of the fold is achieved by heating the folding device (5), in particular its blades, so that the thermoplastic components or the fixing material of the sheet reach at least their softening temperature and the folds are fixed at the ends of the blades.

8. A process according to claim 1, **characterised in that** the prior fixing of the fold in the sheet is by heating the incoming sheet to bring the thermoplastic components or the fixing material to at least their softening temperature, while the folding device (5) remains cold.

9. A process according to claim 1, **characterised in that**, if working with an incoming sheet not having any fixing material, a bonding station (40, 41, 42) is provided upstream of the folding device (5), which deposits fixing material on the incoming sheet that is to form the three-dimensional non-woven structure.

10. A process according to claim 1, **characterised in that** the extraction device (6) is extended by a compression device (7) consisting of a pair of sleeves (27) stretched between two opposing cylinders (28) whose linear speed of movement is less than that of the extraction device (6) to ensure compression of the material.

11. A production line for implementing the process according to any of claims 1 to 10, the said line comprising a folding device (5) with at least two heads (12), drums or shafts fitted with fixed (13) or movable (13') radial blades which overlap, and an extraction device (6), **characterised in that** the extraction device (6) consists of a pair of sleeves (25) stretched between two cylinders (26) superimposed but separated by a distance that is related directly to the overlapping (23) of the blades (13, 13') whose linear speed of movement is slightly greater than the output speed from the folding device (5), the cylinders (26) downstream of the sleeves (25) being replaced by fixed guides (26') or roller guides (26") and **in that** the extraction device (6) is extended either by a compression device (7) consisting of a pair of sleeves (27) stretched between two cylinders superimposed (28), whose linear speed of movement is less than that of the extraction device (6) to ensure compression of the material, or by a compression device consisting of a set of upper and lower plates which are charged to compress the folded material and direct it to a downstream processing station.

12. A production line according to claim 11, **characterised in that** the folding device (5) has two heads (12) to which fixed (13) or movable (13') radial blades are attached, the distance between the heads being adjustable to determine the height of the fold to be produced and **in that** the heads (12) of the folding device (5) are drums consisting of hollow cylinders to which fixed radial blades (13) are attached.

13. A production line according to claim 11, **characterised in that** the blades (13) on each head (12) are fixed to endless, flexible conveyors (31) such as chains, hinged links, belts or sleeves and the conveyors mesh together, like toothed belts, with two drums (32 and 33), at least one of which is motor driven.

14. A production line according to claim 11, **characterised in that** the folding device (5) has two heads (12) to which radial movable blades (13') are attached, the distance between the heads being adjustable, to determine the height of the fold to be produced **in that** the said blades (13') fitted to the wheels (18, 19) forming the heads (12) do not retain the same orientation, depending on their position.

15. A production line, according to claim 11, **characterised in that** it also comprises a heating oven (8) consisting of two conveyor belts with a linear movement speed very close to that of the sleeves (27) of the compression device (7).
